# EUROPÄISCHE PATENTANMELDUNG

(11) **EP 4 283 214 A1**
(43) Veröffentlichungstag der Anmeldung: **29.11.2023**
(21) Anmeldenummer: 23170932.0
(22) Anmeldetag: 02.05.2023
(51) Int. Cl.: F24S 25/61, F24S 25/16, H02S 20/23, F24S 25/00

(54) **TRAGGESTELL ZU EINER SCHRÄGEN BEFESTIGUNG EINES SOLARMODULS AUF EINEM DACH**

(30) Priorität: 25.05.2022 DE 102022113181
(71) Anmelder: fischerwerke GmbH & Co. KG, 72178 Waldachtal (DE)
(72) Erfinder: Mazzucato, Federico, 35020 Legnaro (PD) (IT); Martini, Michele, 30038 Spinea (VE) (IT)
(74) Vertreter: Suchy, Ulrich Johannes

(57) **Zusammenfassung**

Zu einer schrägen Befestigung von Solarmodulen (2) auf beispielsweise einem Dach (3) mit aneinandergereihten Tonnendächern schlägt die Erfindung ein Traggestell (1) mit einer Tragstrebe (10), auf der die Solarmodule (2) befestigt werden, einer winkel- und längsverstellbar an der Tragstrebe (10) angeordneten Stützstrebe (11), und schwenkbar an Enden der Tragstrebe (10) und der Stützstrebe (11) angeordnete Standfüße (8) vor. Zur Anpassung an V-förmige Rinnen (4) des Daches (3) zwischen den Tonnendächern weisen die Standfüße (8) gegeneinander verschwenkbare Fußelemente (13) mit jeweils einer Standfläche (18) auf.

## Beschreibung

Die Erfindung betrifft ein Traggestell zu einer schrägen Befestigung eines Solarmoduls auf einem Dach mit den Merkmalen des Oberbegriffs des Anspruchs 1.

Die Patentanmeldung EP 2 383 527 A1 offenbart ein dreiecksförmiges, aus drei geraden Profilstäben zusammengesetztes Traggestell zu einer schrägen Befestigung eines Solarmoduls auf einem Dach. Zur Befestigung des Solarmoduls werden zwei Traggestelle parallel zueinander, mit Abstand voneinander und von einer Seite gesehen deckungsgleich nebeneinander angeordnet und mit zwei Querprofilen verbunden, auf dem das oder mehrere Solarmodule befestigt wird/werden. An einem unteren Profilstab des Traggestells sind zwei Standfüße mit ebenen Standflächen zur Befestigung des Traggestells auf einem Flachdach angeordnet.

Aufgabe der Erfindung ist, ein Traggestell zu einer schrägen Befestigung eines Solarmoduls auf einem Sheddach, Paralleldach oder einer Aneinanderreihung von Tonnendächern vorzuschlagen. Ein Sheddach ist eine Aneinanderreihung von Pultdächern, und ein Paralleldach eine Aneinanderreihung von Satteldächern. Solche Dächer sind beispielsweise auf Fabrikhallen gebräuchlich. Allgemein soll das erfindungsgemäße Traggestell auf einem Dach aufstellbar sein, das zueinander parallele Rinnen oder dergleichen aufweist, zwischen denen das Dach Erhebungen aufweist.

Diese Aufgabe wird erfindungsgemäß durch die Merkmale des Anspruchs 1 gelöst. Das erfindungsgemäße Traggestell weist einen Standfuß zum Aufstellen auf einem Dach und zu einer Befestigung auf dem Dach auf. Der Standfuß weist zwei Fußelemente mit jeweils einer Standfläche auf. Die Standflächen sind insbesondere eben, können aber beispielsweise auch gewölbt, insbesondere konvex gewölbt oder beispielsweise abgewinkelt, beispielsweise V-förmig oder trapezförmig sein. Die beiden Fußelemente sind um eine erste Achse gegeneinander schwenkbar derart, dass ihre Standflächen in eine gemeinsame Standebene oder in eine zueinander abgewinkelte Stellung schwenkbar sind.

Durch die Verschwenkbarkeit der Fußelemente gegeneinander lässt sich der Standfuß nicht nur auf eine ebene Standfläche stellen, sondern beispielsweise auch in eine V-förmige oder gewölbte Rinne, wobei sich die Standflächen durch Schwenken der beiden Fußelemente gegeneinander an einen Winkel von zwei Schenkeln des "V" oder an eine Wölbung beziehungsweise Rundung der Rinne stufenlos anpassen lassen. Durch die Verschwenkbarkeit der Fußelemente zueinander ist eine optimale Anpassung an die Kontur der Rinne möglich. Auch etwaige Fertigungstoleranzen derartiger Rinnen können durch die Verschwenkbarkeit der Fußelemente leicht kompensiert werden.

Vorzugsweise ist der Standfuß oder sind seine beiden Fußelemente um eine zweite Achse schwenkbar an dem Traggestell angeordnet, um eine Schräge eines auf dem Traggestell befestigten Solarmoduls einstellen zu können. Die "Schräge" des Solarmoduls ist ein Winkel zwischen dem Solarmodul und dem Dach, auf dem das Traggestell aufgestellt ist oder wird, beziehungsweise ein Winkel des Solarmoduls zu einer Horizontalen oder Vertikalen.

Die erste Achse und die zweite Achse sind vorzugsweise parallel zueinander und können einen Abstand voneinander aufweisen oder identisch sein. Vorzugsweise sind die erste Achse und die zweite Achse horizontal, wenn das Traggestell wie vorgesehen aufgestellt ist.

Eine Ausgestaltung der Erfindung sieht vor, dass der Standfuß um die zweite Achse schwenkbar an einem ersten Traggestell, und um eine dritte Achse schwenkbar an einem zweiten Traggestell angeordnet ist derart, dass die beiden Traggestelle über den Standfuß gelenkig verbunden sind. Auf diese Weise lassen sich mehrere Traggestelle für mehrere Solarmodule in beispielsweise einer Linie oder in einer Ebene hintereinander aufstellen. Die dritte Achse ist vorzugsweise parallel zu der zweiten Achse, wobei die zweite und die dritte Achse einen Abstand voneinander aufweisen oder identisch sein können.

Eine Ausgestaltung der Erfindung sieht die Ausbildung der Fußelemente als U-Profile mit zwei voneinander beabstandeten und insbesondere zueinander parallelen Flanschen und einem die beiden Flansche verbindenden Steg vor, wobei der Steg die Standfläche des jeweiligen Fußelements aufweist oder bildet. Die Flansche können auch als "Schenkel" und der Steg als "Joch" des U-Profils aufgefasst werden. Die beiden Flansche stehen insbesondere rechtwinklig und zur gleichen Seite von dem Steg ab. Seitlich auf die Flansche gesehen sind die Flansche in einer Ausgestaltung der Erfindung schräg zu der Standfläche des jeweiligen Fußelements. Beispielsweise weisen die Flansche von der Seite gesehen die Form eines schiefen, das heißt unregelmäßigen Dreiecks oder eines schiefen Trapezes auf oder sind streifenförmig, wobei Längsseiten der Flansche schräg in gleicher Richtung zu der Standfläche des jeweiligen Fußelements verlaufen. Die Streifen können eine konstante Breite oder eine sich über ihre Länge ändernde Breite aufweisen, insbesondere werden die Flansche des Fußelements mit zunehmendem Abstand von der Standfläche schmaler. Senkrecht auf die Flansche des U-Profils gesehen, kann der Standfuß bei einer Ausgestaltung der Erfindung auch die Form eines "L" aufweisen, dessen einer Schenkel den Steg mit der Standfläche und dessen anderer Schenkel die Flansche bildet, wobei die Schenkel des "L" schräg in einem stumpfen Winkel zueinander stehen.

Eine Ausführung der Erfindung sieht vor, dass das Traggestell zwei Standfüße mit jeweils zwei Fußelementen, eine Tragstrebe und eine Stützstrebe aufweist. Auf der Tragstrebe ist oder wird das Solarmodul befestigt. Die Tragstrebe und die Stützstrebe sind in einem vorzugsweise einstellbaren Winkel zueinander angeordnet, um die Tragstrebe in ihrem Winkel zu dem Dach und damit die Schräge des Solarmoduls einstellen zu können.

Die Standfüße sind insbesondere an einem ersten Ende der Tragstrebe und an einem ersten Ende der Stützstrebe um die zweite Achse oder um die dritte Achse schwenkbar angeordnet. Die zweite Achse und die dritte Achse sind die Achsen, um die der jeweilige Standfuß schwenkbar an der Tragstrebe oder an der Stützstrebe angeordnet ist. Die zweite Achse und die dritte Achse und vorzugsweise auch die erste Achse sind vorzugsweise parallel zueinander und verlaufen vorzugsweise senkrecht zu einer Ebene, die die Tragstrebe und die Stützstrebe aufspannen. Die erste Achse ist die Achse, um die die Fußelemente eines Standfußes gegeneinander verschwenkbar sind.

Ein zweites Ende der Stützstrebe ist bei Ausgestaltungen der Erfindung zwischen zwei Enden der Tragstrebe oder an einem zweiten Ende der Tragstrebe angeordnet. Zu einer Verstellung und Einstellung der Schräge des Solarmoduls und/oder zu einer Anpassung des Abstandes der Standfüße voneinander und an Abstände der Rinnen des Daches ist das zweite Ende der Stützstrebe vorzugsweise in einer Längsrichtung der Tragstrebe an der Tragstrebe verstellbar.

In bevorzugter Ausgestaltung der Erfindung weist das Traggestell an seiner Unterseite einen Freiraum für die Erhebungen des Daches zwischen den Rinnen des Daches beziehungsweise zwischen den Standfüßen auf. Das Traggestell weist bei dieser Ausgestaltung der Erfindung keine oder allenfalls eine hoch angeordnete Verbindungsstrebe oder sonstige Verbindung zwischen der Tragstrebe und der Stützstrebe auf. Eine eventuell vorhandene Verbindungsstrebe oder sonstige Verbindung ist so hoch über der Standebene angeordnet, dass sie sich über der Erhebung des Daches zwischen den Rinnen des Daches, in denen die Standfüße des Traggestells angeordnet sind, befindet.

In einer bevorzugten Ausgestaltung der Erfindung sind die beiden Fußelemente eines Standfußes des erfindungsgemäßen Traggestells scherenartig um die erste Achse gegeneinander verschwenkbar verbunden. Der Standfuß weist bei dieser Ausgestaltung der Erfindung beispielsweise einander kreuzende Hebel auf, die an einer Kreuzungsstelle um die erste Schwenkachse schwenkbar miteinander verbunden sind. Jeder Hebel eines Standfußes ist Bestandteil eines Fußelements des Standfußes. Beispielsweise bilden die Flansche der als U-Profile ausgebildeten Fußelemente die einander kreuzenden Hebel, die an ihrer Kreuzungsstelle um die erste Achse schwenkbar miteinander verbunden sind.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: ein Dach, auf dem mittels erfindungsgemäßer Traggestelle Solarmodule schräg befestigt sind, in einer perspektivischen Darstellung;
- Figur 2: eine Schnittdarstellung des Daches mit den Traggestellen und Solarmodulen aus Figur 1;
- Figur 3: eine perspektivische Darstellung von zwei erfindungsgemäßen Traggestellen aus Figuren 1 und 2;
- Figur 4: eine vergrößerte Seitenansicht eines erfindungsgemäßen Standfußes eines Traggestells aus Figuren 1 bis 3; und
- Figur 5: eine vergrößerte Seitenansicht einer zweiten Ausführungsform eines erfindungsgemäßen Standfußes eines Traggestells aus Figuren 1 bis 3.

Das erfindungsgemäße Traggestell 1 ist zu einer schrägen Befestigung eines oder mehrerer Solarmodule 2 auf einem Dach 3 vorgesehen, das zueinander parallele Rinnen 4 aufweist, zwischen denen das Dach 3 zueinander parallele und parallel zu den Rinnen 4 verlaufende Erhebungen 5 aufweist. Das Traggestell 1 kann auch auf anderen Dächern, beispielsweise auch auf einem Flachdach oder an anderer Stelle als auf einem Dach aufgestellt werden (nicht dargestellt).

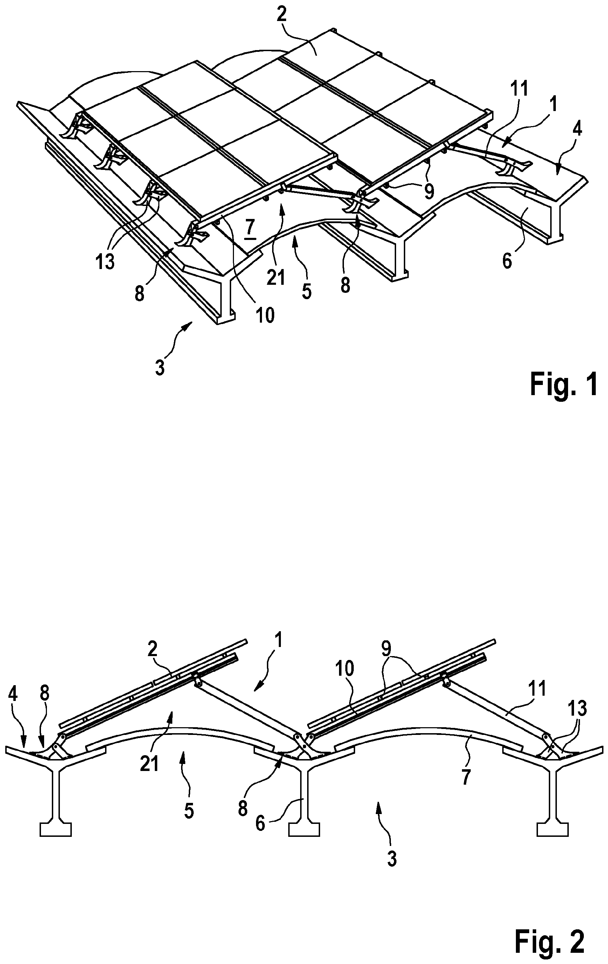

Die Figuren 1 und 2 zeigen die Befestigung der Solarmodule 2 mittels erfindungsgemäßer Traggestelle 1 auf einem Dach 3, das aneinandergereihte Tonnendächer aufweist, in einer perspektivischen Darstellung (Figur 1) und in einer Schnittdarstellung (Figur 2). Das Dach 3 weist langgestreckte Träger aus Stahlbeton mit Y-förmigem Querschnitt auf, die daher im Folgenden als Y-Träger 6 bezeichnet werden. Die Y-Träger 6 sind parallel zueinander und mit Abstand voneinander angeordnet. Zwischenräume zwischen den Y-Trägern 6 sind mit zylindersegmentschalenförmigen, lichtdurchlässigen Dachelementen 7 abgedeckt, deren Wölbung nach oben gerichtet ist, und die die Erhebungen 5 zwischen den Rinnen 4 des Daches 3 bilden. Querhäupter der Y-Träger 6 bilden die zueinander parallelen, im Ausführungsbeispiel V-förmigen Rinnen 4 des Daches 3.

Zur Befestigung der Solarmodule 2 werden mehrere Traggestelle 1 parallel zueinander und mit Abstand nebeneinander von einer Seite aus gesehen deckungsgleich auf dem Dach 3 aufgestellt, so dass Standfüße 8 der Traggestelle 1 sich in den Rinnen 4 des Daches 3 befinden. Die Traggestelle 1 werden mit zwei oder mehr geraden Querträgern 9 verbunden, auf denen die Solarmodule 2 befestigt werden. In der Zeichnung sind die Traggestelle 1 quer zu den Dachelementen 7 und zu den Rinnen 4 angeordnet derart, dass die Traggestelle 1 die nach oben gewölbten Dachelemente 7 überspannen, und die Standfüße 8 auf verschiedenen Y-Trägern 6 des Daches 3 stehen. Möglich ist auch eine nicht dargestellte Anordnung der Traggestelle 1 parallel zu den Dachelementen 7 und in einer Längsrichtung der Y-Träger 6 derart, dass die Standfüße 8 eines Traggestells 1 und die Standfüße 8 über einen Standfuß 8 miteinander verbundener Traggestelle 1 auf demselben Y-Träger 6 stehen.

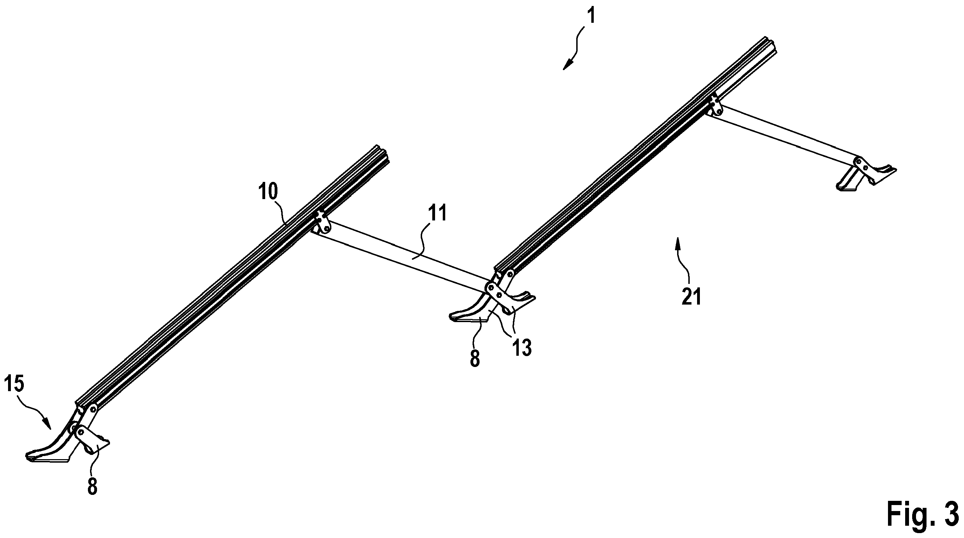

Jedes Traggestell 1 weist, wie in Figuren 2 und 3 zu sehen, eine Tragstrebe 10 und eine Stützstrebe 11 auf, an deren ersten Enden die Standfüße 8 angeordnet sind. Die Tragstrebe 10 ist im Ausführungsbeispiel, ebenso wie die Querträger 9, ein gerades, offenes oder geschlossenes Spezialprofil aus Metall, das beispielsweise durch Strangpressen oder Rollformen hergestellt sein kann. Die Stützstrebe 11 weist im Ausführungsbeispiel ein gerades Rechteck- oder quadratisches Rohrprofil auf. Andere Ausführungen der Querträger 9, Tragstreben 10 und Stützstreben 11 sind möglich.

Ein zweites Ende der Stützstrebe 11 ist winkelverstellbar und in einer Längsrichtung der Tragstrebe 10 verschiebbar und sowohl gegen Schwenken als auch gegen Verschieben festlegbar an der Tragstrebe 10 angeordnet. Die Solarmodule 2 werden auf den Tragstreben 10 oder auf den Querträgern 9 befestigt, die ihrerseits auf den Tragstreben 10 der mit Abstand nebeneinander angeordneten Traggestelle 1 befestigt sind.

Durch Einstellung eines Winkels zwischen den Tragstreben 10 und den Stützstreben 11 der Traggestelle 1 lässt sich eine Neigung der Tragstreben 10 und der Solarmodule 2, die unmittelbar auf den Tragstreben 10 oder auf den Querträgern 9 befestigt sind, die ihrerseits quer auf den Tragstreben 10 befestigt sind, einstellen. Das heißt, durch die Einstellung des Winkels zwischen den Tragstreben 10 und den Stützstreben 11 lässt sich eine Anordnung der Solarmodule 2 schräg in einem Winkel zu dem Dach 3 einstellen. Außerdem wird durch den Winkel zwischen den Tragstreben 10 und den Stützstreben 11 und eine Position, in der das zweite Ende der Stützstrebe 11 in der Längsrichtung der Tragstrebe 10 an der Tragstrebe 10 festgelegt wird, ein Abstand der Standfüße 8 der Traggestelle 1 an den Abstand der Rinnen 4 des Daches 3 angepasst.

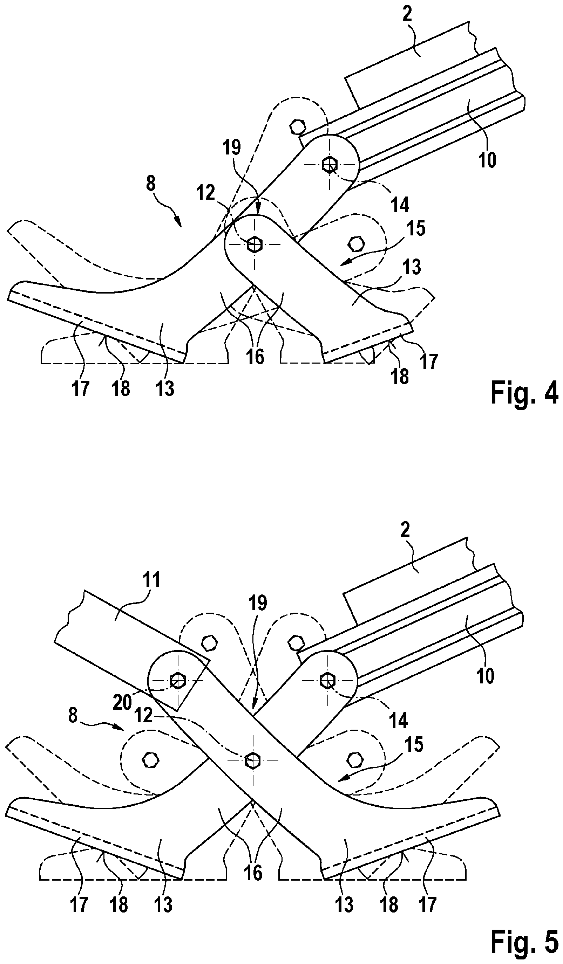

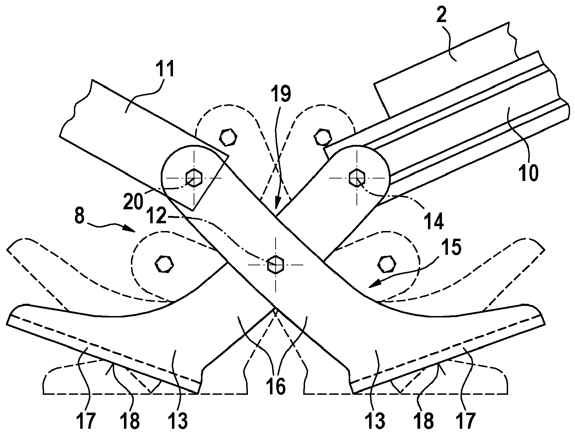

Figur 4 zeigt einen Standfuß 8 des erfindungsgemäßen Traggestells 1. Der Standfuß 8 weist zwei Fußelemente 13 auf, die scherenartig um eine erste Achse 12 gegeneinander verschwenkbar miteinander verbunden sind. Die erste Achse 12 verläuft senkrecht zu einer von der Tragstrebe 10 und der Stützstrebe 11 aufgespannten Ebene des Traggestells 1.

Die Fußelemente 13 weisen U-Profile 15 mit zwei zueinander parallelen Flanschen 16 auf, die durch einen Steg 17 einstückig miteinander verbunden sind. Die Flansche 16 können auch als "Schenkel" und der Steg 17 als "Joch" der U-Profile 15 der Fußelemente 13 aufgefasst werden. Die Stege 17 beziehungsweise ihre Außenseiten bilden Standflächen 18 der Fußelemente 13 beziehungsweise der Standfüße 8 des erfindungsgemäßen Traggestells 1.

Die Flansche 16 sind streifenförmig und stehen von einer Seite, das heißt parallel zu der ersten Achse 12 auf den Standfuß 8 gesehen schräg in einer Richtung von dem Steg 17 ab. Von der Seite gesehen sind die Flansche 16 deckungsgleich. In Figur 4 sind die Flansche 16 eines der beiden Fußelemente 13 des Standfußes 8 kürzer als die Flansche 16 des anderen Fußelements 13. Die beiden Fußelemente 13 des Standfußes 8 sind entgegengesetzt orientiert angeordnet derart, dass die kürzeren Flansche 16 des einen Fußelements 13 bis zu den längeren Flanschen 16 des anderen Fußelements 13 reichen. Die längeren Flansche 16 stehen von ihrem Steg 17 aus gesehen über die längeren Flansche 16 des einen Fußelements 13 über. An einer Kreuzungsstelle, an denen die Flansche 16 der Fußelemente 13 einander kreuzen, sind die Flansche 16, beziehungsweise die Fußelemente 13 des jeweiligen Standfußes 8, um die erste Achse 12 gegeneinander verschwenkbar miteinander verbunden.

Die schwenkbar miteinander verbundenen Fußelemente 13 beziehungsweise ihre Flansche 16 können auch als miteinander verbundene Schwenkhebel eines Gelenks 19 aufgefasst werden, die um die erste Achse 12 als Schwenkachse des Gelenks 19 nach Art von Scherenhebeln einer Schere schwenkbar miteinander verbunden sind.

Durch ein Schwenken der Fußelemente 13 der Standfüße 8 der erfindungsgemäßen Traggestelle 1 gegeneinander, lassen sich die Standflächen 18 der Fußelemente 13 in eine gemeinsame Standebene oder in eine zueinander abgewinkelte Stellung der Standflächen 18 schwenken. Die Figuren 4 und 5 zeigen die Standfüße 8 mit durchgezogenen Strichen mit V-förmig zueinander abgewinkelten Standflächen 18 und mit Strichlinien mit den Standflächen 18 stärker abgewinkelt und in einer gemeinsamen Standebene.

Durch die Verschwenkbarkeit der Standflächen 18 ihrer Fußelemente 13 lassen sich die Standfüße 8 an V-förmige Rinnen 4 mit unterschiedlichen Winkeln ihrer V-Querschnitte und an Rinnen 4 mit runden Querschnitten anpassen. Außerdem lassen sich die Standfüße 8 auf ebene Untergründe stellen, wozu die Standflächen 18 ihrer Fußelemente 13 in der Ebene als gemeinsame Standebene ausgerichtet werden.

Die Stege 17 der Fußelemente 13 der Standfüße 8 weisen ein oder mehrere, in der Zeichnung nicht sichtbare Löcher zum Festschrauben auf den Y-Trägern 6 des Daches 3 auf.

Der in Figur 5 dargestellte Standfuß 8 wird zu einem gelenkigen Verbinden von zwei erfindungsgemäßen Traggestellen 1 verwendet. Dazu wird das eine Ende einer Tragstrebe 10 eines ersten Traggestells 1 um die zweite Achse 14 schwenkbar mit den Flanschen 16 des U-Profils 15 eines Fußelements 13 des Standfußes 8 und das eine Ende einer Stützstrebe 11 eines sich anschließenden zweiten Taggestells 1 um eine dritte Achse 20 schwenkbar mit den Flanschen 16 des U-Profils 15 des anderen Fußelements 13 des Standfußes 8 verbunden.

Die dritte Achse 20 des anderen Fußelements 13 entspricht der zweiten Achse 14 des einen Fußelements 13. Es wird hier willkürlich die Achse, um die der Standfuß 8 schwenkbar an dem einen Ende der Tragstrebe 10 eines Traggestells 1 angeordnet ist, als zweite Achse 14 und die Achse, um die der Standfuß 8 schwenkbar an dem einen Ende der Stützstrebe 11 eines (anderen) Traggestells 1 angeordnet ist, als dritte Achse 20 bezeichnet. Die Bezeichnungen können auch umgekehrt gewählt oder die zweite und die dritte Achse 14, 20 einheitlich als zweite Achsen 14 bezeichnet werden. Die zweite Achse 14 und die dritte Achse 20 sind parallel zueinander und damit im Ausführungsbeispiel auch parallel zu der ersten Achse 12, um die die beiden Fußelemente 13 der Standfüße 8 gegeneinander verschwenkbar sind. Im Ausführungsbeispiel sind also alle drei Achsen 12, 14, 20 parallel zueinander und senkrecht zu der Ebene, die die Tragstreben 10 und die Stützstreben 11 der Traggestelle 1 aufspannen.

In Figur 5 sind die Flansche 16 der beiden Fußelemente 13 des Standfußes 8 gleich lang und kreuzen einander X-förmig An der Kreuzungsstelle sind die Flansche 16, beziehungsweise die Fußelemente 13 des Standfußes 8, um die erste Achse 12 gegeneinander verschwenkbar miteinander verbunden.

An dem einen Ende einer Tragstrebe 10 eines ersten Traggestells 1 und an dem einen Ende einer Stützstrebe 11 eines letzten Traggestells 1 wird jeweils einer der in Figur 4 dargestellten Standfüße 8 um die zweite Achse 14 schwenkbar an den Flanschen 16 des U-Profils 15 des Fußelements 13 mit den längeren Flanschen 16 angeordnet. Tragstreben 10 und Stützstreben 11 hintereinander aufgestellter Traggestelle 1 sind über jeweils einen der in Figur 5 dargestellten Standfüße 8 schwenkbar miteinander verbunden. Dazu ist das eine Ende einer Tragstrebe 10 eines ersten Traggestells 1 um die zweite Achse 14 schwenkbar an einem Fußelement 13 des Standfußes 8 verbunden, und das zugewandte Ende der Stützstrebe 11 eines zweiten Traggestells 1 um die dritte Achse 20 schwenkbar mit dem anderen Fußelement 13 des Standfußes 8 verbunden.

Im Ausführungsbeispiel verlaufen die erste Achse 12, um die die Fußelemente 13 der Standfüße 8 scherenartig gegeneinander verschwenkbar sind, die zweite Achse 14, um die die Standfüße 8 schwenkbar an dem einen Ende einer Tragstrebe 8, und die dritte Achse 20, um die die Standfüße 8 schwenkbar an dem einen Ende einer Stützstrebe 11 angeordnet sind, parallel zueinander. Im Ausführungsbeispiel weist die zweite Achse 14 einen Abstand von der ersten Achse 12 auf und ist in einem Abstand von der ersten Achse 12 auf einer dem Steg 17 mit der Standfläche 18 gegenüberliegenden Seite der ersten Achse 12 an den Flanschen 16 des U-Profils 15 des jeweiligen Fußelements 13 angeordnet.

Zwischen den Standfüßen 8 weist das erfindungsgemäße Traggestell 1 einen Freiraum 21 auf, der oben von der Tragstrebe 10 und der Stützstrebe 11 begrenzt wird und unten offen ist. Das ermöglicht die Aufstellung des Traggestells 1 quer zu den Y-Trägern 6 des Daches 3 über die zylinderschalenförmig nach oben gewölbten Dachelemente 7, die Erhebungen 5 des Daches 3 zwischen den Y-Trägern 6 bilden, hinweg.

### Bezugszeichenliste

- 1: Traggestell
- 2: Solarmodul
- 3: Dach
- 4: Rinne
- 5: Erhebung
- 6: Y-Träger
- 7: Dachelement
- 8: Standfuß
- 9: Querträger
- 10: Tragstrebe
- 11: Stützstrebe
- 12: erste Achse
- 13: Fußelement
- 14: zweite Achse
- 15: U-Profil
- 16: Flansch
- 17: Steg
- 18: Standfläche
- 19: Gelenk
- 20: dritte Achse
- 21: Freiraum

## Patentansprüche

1. Traggestell (1) zu einer schrägen Befestigung eines Solarmoduls (2) auf einer Oberseite des Traggestells (1) auf einem Dach (3), wobei das Traggestell (1) einen Standfuß (8) zur Befestigung auf dem Dach (3) aufweist, **dadurch gekennzeichnet, dass** der Standfuß (8) zwei Fußelemente (13) mit jeweils einer Standfläche (18) aufweist, die um eine erste Achse (12) gegeneinander schwenkbar sind derart, dass die Standflächen (18) der beiden Fußelemente (13) in eine gemeinsame Standebene oder in eine zueinander abgewinkelte Stellung schwenkbar sind.

2. Traggestell (1) nach Anspruch 1, **dadurch gekennzeichnet, dass** der Standfuß (8) oder die Fußelemente (13) um eine zweite Achse (14) und/oder um eine dritte Achse (20) schwenkbar an dem Traggestell (1) angeordnet sind.

3. Traggestell (1) nach Anspruch 1 oder 2, **dadurch gekennzeichnet, dass** der Standfuß (8) um die zweite Achse (14) schwenkbar an einem ersten Traggestell (1) und um die dritte Achse (20) schwenkbar an einem zweiten Traggestell (1) angeordnet ist.

4. Traggestell (1) nach einem oder mehreren der Ansprüche 1 bis 3, **dadurch gekennzeichnet, dass** die Fußelemente (13) jeweils ein U-Profil (15) aufweisen, deren Stege (17) die Standflächen (18) bilden, von denen jeweils zwei Flansche (16) schräg zu der jeweiligen Standfläche (18) abstehen.

5. Traggestell (1) nach einem oder mehreren der vorhergehenden Ansprüche, **dadurch gekennzeichnet, dass** das Traggestell (1) eine Tragstrebe (10), auf der das Solarmodul (2) befestigbar ist, und eine Stützstrebe (11) in einem Winkel zu der Tragstrebe (10) aufweist, und dass ein Standfuß (8) um die zweite Achse (14) oder um eine dritte Achse (20) schwenkbar an der Tragstrebe (10) und ein Standfuß (8) um die dritte Achse (20) oder um die zweite Achse (14) schwenkbar an der Stützstrebe (11) angeordnet ist.

6. Traggestell (1) nach Anspruch 5, **dadurch gekennzeichnet, dass** das Traggestell (1) einen Freiraum (21) zwischen den Standfüßen (8) an der Unterseite des Traggestells (1) aufweist.

7. Traggestell (1) nach einem oder mehreren der vorhergehenden Ansprüche, **dadurch gekennzeichnet, dass** die Fußelemente (13) des Standfußes (8) ein Gelenk (19) mit der ersten Achse (12) als Schwenkachse des Gelenks (19) bilden, um die die Fußelemente (13) des Standfußes (8) als Bestandteile des Gelenks (19) scherenartig schwenkbar miteinander verbunden sind.
